# EUROPÄISCHE PATENTANMELDUNG

(11) **EP 3 188 070 A1**
(43) Veröffentlichungstag der Anmeldung: **05.07.2017**
(21) Anmeldenummer: 15203183.7
(22) Anmeldetag: 30.12.2015
(51) Int. Cl.: G06F 21/62, H04L 29/06, H04L 29/08, H04L 12/28, H04L 12/26

(54) **VERFAHREN UND VORRICHTUNGEN ZUM SCHUTZ VON VERTRAULICHEN ELEKTRONISCHEN DATEN**

(71) Anmelder: Deutsche Telekom AG, 53113 Bonn (DE)
(72) Erfinder: Unterschütz, Thomas, 64331 Weiterstadt (DE); Huwig, Kurt, 57515 Alsting (FR)
(74) Vertreter: Patentship Patentanwaltsgesellschaft mbH

(57) **Zusammenfassung**

Die Erfindung betrifft ein Verfahren zum Schutz von elektronischen Daten, die in einem Hausautomatisierungssystem (210) anfallen, umfassend: Ermitteln von Daten der elektronischen Daten, die mit einem Nutzer des Heimautomatisierungssystems (210) assoziierbar sind; Verschleiern der mit dem Nutzer des Heimautomatisierungssystems (210) assoziierbaren Daten der elektronischen Daten mittels eines ersten kryptographischen Schlüssels; Übermitteln der elektronischen Daten mit den mittels des ersten kryptographischen Schlüssels verschleierten Daten von dem Heimautomatisierungssystem (210) an eine Datenverwaltungsentität (230); und Verschleiern der mittels des ersten kryptographischen Schlüssels verschleierten Daten mittels eines zweiten kryptographischen Schlüssels durch die Datenverwaltungsentität (230). Das Verfahren erlaubt die Rückpersonalisierung der mittels des ersten und des zweiten kryptographischen Schlüssels verschleierten Daten. Ferner betrifft die Erfindung ein entsprechendes Heimautomatisierungssystem (210), eine entsprechende Datenverwaltungsentität (220), eine entsprechende Schlüsselverwaltungsentität (230) und ein aus diesen Elementen bestehendes System (200).

## Beschreibung

Die Erfindung betrifft Verfahren und Vorrichtungen zum Schutz von vertraulichen elektronischen Daten, insbesondere von vertraulichen elektronischen Daten, die in einem Hausautomatisierungssystem anfallen.

Unter dem Begriff Hausautomatisierung und verwandten Begriffen, wie "Smart Home", "Smart Living" und dergleichen, wird insbesondere die Vernetzung und Fernsteuerung von vernetzungsfähigen Geräten im privaten Wohnbereich verstanden. Bei derartigen Geräten, die als Hausautomatisierungsgeräte bezeichnet werden, kann es sich beispielsweise um Geräte der Haustechnik (z. B. Lichtsteuerung, Alarmanlage, Heizungsund Jalousien-Steuerung), "Smart Metering"-Geräte (z. B. elektrischer Energiezähler, Wasserzähler, Gaszähler), intelligente Elektrohaushaltsgeräte (z. B. Herd, Kühlschrank, Waschmaschine), Multimedia-Geräte (z. B. Fernseher, Videorekorder, Stereoanlage) und dergleichen handeln. Derartige Hausautomatisierungsgeräte bilden zusammen mit einer zentralen Steuereinheit, die üblicherweise als ein Home-Gateway ausgestaltet ist oder als Komponente eines solchen Home-Gateways implementiert ist, ein Hausautomatisierungssystem aus. Dabei steht das Home-Gateway wiederum in Kommunikation mit dem Internet oder einem anderen externen Kommunikationsnetz, was es ermöglicht, zum einen das Hausautomatisierungssystem von extern, beispielsweise über ein Mobilfunkendgerät des Hausbesitzers, anzusteuern und zum anderen Statusinformationen des Hausautomatisierungssystems, beispielsweise an das Mobilfunkendgerät des Hausbesitzers, zu versenden.

Aufgrund der großen Vielfalt an unterschiedlichen Hausautomatisierungsgeräten, die mit unterschiedlichen Kommunikationsprotokollen arbeiten, ist das Home-Gateway eines Hausautomatisierungssystems in der Regel ausgebildet, über eine Vielzahl unterschiedlicher Kommunikationskanäle mit den einzelnen Hausautomatisierungsgeräten zu kommunizieren. Beispielsweise kann die Kommunikation zwischen dem Home-Gateway und einem Hausautomatisierungsgerät kabelgebunden oder über eine Funkverbindung erfolgen. Dem Fachmann bekannte Beispiele für kabelgebundene Verbindungen sind unter anderem Ethernet, Powerline, M-Bus und dergleichen. Als Funkverbindung kommen insbesondere WLAN bzw. WiFi, Bluetooth, ZigBee und dergleichen zum Einsatz. Die Anbindung des Home-Gateways an ein externes Kommunikationsnetz, insbesondere das Internet, kann insbesondere über DSL, ISDN, Kabel, Glasfaser, Mobilfunk und dergleichen erfolgen.

Im Rahmen der Hausautomatisierung können große Mengen an Nutzungsdaten anfallen. Dabei können unter Nutzungsdaten beispielsweise der Zeitpunkt des Betätigens eines Lichtschalters durch den Nutzer, die von einem Temperatursensor zu einem Zeitpunkt gemessene Temperatur oder auch Zustands- oder Ereignisinformationen von Rauchmeldern oder Alarmanlagen verstanden werden. Derartige Nutzungsdaten können für eine Vielzahl von sekundären Geschäftsmodellen interessant sein, bei denen diese Nutzungsdaten unter unterschiedlichen Gesichtspunkten ausgewertet werden. So kann anhand von im Rahmen der Hausautomatisierung anfallenden Nutzungsdaten beispielsweise ausgewertet werden, wie oft Waschmaschinen bei welcher Waschtemperatur gestartet werden, und unter Zuhilfenahme von weiteren Daten, wie beispielsweise der Wasserhärte, nach wie vielen Waschvorgängen Waschmaschinen in Abhängigkeit der Wasserhärte und der Waschtemperatur einen Defekt erleiden.

Da es sich bei den bei der Hausautomatisierung anfallenden Nutzungsdaten in der Regel um personenbezogene Daten handelt, d.h. Daten, die mit einer Person, in der Regel dem Nutzer des Hausautomatisierungssystems, assoziiert werden können, müssen aus Gründen des Datenschutzes die Daten herkömmlicherweise einer Datenverwaltungsentität in Form eines Treuhänders übergeben und von dieser insbesondere mittels einer Verschleierung anonymisiert oder pseudonymisiert werden. Im Kontext der Hausautomatisierung werden personenbezogene Daten in der Regel nicht nur verschleiert, sondern vielmehr hart, das heißt für einen Angreifer nicht zurückrechenbar verschlüsselt. Für das hier beschriebene Verfahren spielt die Härte der Verschlüsselung allerdings keine Rolle. Die Anonymisierung hat dabei das Ziel einen Rückschluss von den anonymisierten personenbezogenen Daten auf die Person vollständig zu verhindern. Die Pseudonymisierung ersetzt die Wiedererkennungsmerkmale einer Person mit einem Pseudonym, um die Wiedererkennung auszuschließen oder wesentlich zu erschweren. Der entscheidende Unterschied zwischen Anonymisierung und Pseudonymisierung ist bei der Anonymisierung das Auflösen bzw. bei der Pseudonymisierung das Erhalten von Bezügen, die zwischen verschiedenen personenbezogenen Daten einer Person ursprünglich bestanden.

Die verschleierten, d.h. insbesondere anonymisierten oder pseudonymisierten, Nutzungsdaten können von dem Treuhänder dann an einen oder mehrere Datenverwerter übergeben werden, von dem die anonymisierten oder pseudonymisierten Nutzungsdaten ausgewertet werden können. Bei dem Datenverwerter kann es sich neben einer dritten Person auch um den Nutzer oder den Betreiber des Hausautomatisierungssystems handeln.

Voraussetzung dafür, dass dies so funktioniert, ist insbesondere, dass sowohl der Nutzer des Hausautomatisierungssystems, in dem die Nutzungsdaten anfallen, als auch der Datenverwerter, der die Nutzungsdaten auswerten möchte, dem Treuhänder vollständig vertrauen können. Dieses Vertrauen ist bei Nutzern von Hausautomatisierungssystemen wegen der besonderen Sensibilität der Nutzungsdaten oftmals nicht vorhanden. Folglich werden Nutzungsdaten von den Nutzern von Hausautomatisierungssystemen, wenn überhaupt nur ungern zur weiteren Auswertung zur Verfügung gestellt. Überdies ist die Gesetzeslage in vielen Ländern derart, dass der Nutzer eines Hausautomatisierungssystems der Weitergabe und damit der Verwertung der in seinem Hausautomatisierungssystem anfallenden Nutzungsdaten aktiv zustimmen muss. In diesem Zusammenhang wird von Nutzern von Hausautomatisierungssystemen die Zustimmung zur Weiterverwertung ihrer Nutzungsdaten häufig gar nicht erst erteilt.

Ferner gibt es mehrere Gründe dafür, dass es möglich sein muss, dass ein Anfragender "punktuell" auf die ursprünglichen, personenbezogenen Daten zugreifen muss. Das dazu notwendige Zurückschließen erfolgt herkömmlicherweise durch den Treuhänder, der alleine dazu in der Lage ist, die pseudonymisierten Daten wieder in ihre ursprüngliche, mit der Person assozüerbare Form zurückzuführen. Für einen Anfragenden können die Gründe für das Zurückführen im Rahmen eines hoheitlich geforderten Einblicks in die Nutzungsdaten ("legal interception"), aber auch im Rahmen einer "punktuellen" Analyse eines erfolgten Angriffs z.B. auf das Hausautomatisierungssystem liegen.

Vor diesem Hintergrund ist es die Aufgabe der vorliegenden Erfindung, ein verbessertes Verfahren und ein verbessertes System zum Schutz von vertraulichen, elektronischen Daten bereitzustellen, insbesondere von elektronischen Daten, die im Zusammenhang mit einem Hausautomatisierungssystem anfallen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum Schutz von elektronischen Daten, die in einem Hausautomatisierungssystem anfallen, d.h. aufgezeichnet werden. Dabei umfasst das Verfahren die folgenden Schritte: das Ermitteln von Daten der elektronischen Daten, die mit einem Nutzer des Heimautomatisierungssystems assoziierbar sind; das Verschleiern der mit dem Nutzer des Heimautomatisierungssystems assoziierbaren Daten der elektronischen Daten mittels eines ersten kryptographischen Schlüssels; das Übermitteln der elektronischen Daten mit den mittels des ersten kryptographischen Schlüssels verschleierten Daten von dem Heimautomatisierungssystem an eine Datenverwaltungsentität; und das Verschleiern der mittels des ersten kryptographischen Schlüssels verschleierten Daten mittels eines zweiten kryptographischen Schlüssels durch die Datenverwaltungsentität.

Das Verfahren gemäß dem ersten Aspekt der Erfindung erlaubt die Pseudonymisierung von Nutzungsdaten bereits im Hausautomatisierungssystem des Nutzers. Dieser stellt dem Treuhänder nunmehr seine Nutzungsdaten nur noch verschleiert, insbesondere pseudonymisiert oder anonymisiert, zur Verfügung. Dem gesunden Misstrauen des Nutzers des Hausautomatisierungssystems gegen einen Missbrauch der in seinem Hausautomatisierungssystem gesammelten Nutzungsdaten kann somit maßgeblich entgegengewirkt werden. Das notwendige Vertrauensverhältnis wird beibehalten. Ferner können beispielsweise im Rahmen eines hoheitlich geforderten Einblicks in die Nutzungsdaten, aber auch im Rahmen einer "punktuellen" Analyse, beispielsweise in Reaktion auf einen auf das Hausautomatisierungssystem erfolgten Angriff, die verschleierten, insbesondere pseudonymisierten oder anonymisierten, Daten mittels des ersten und des zweiten kryptographischen Schlüssels wieder auf den Nutzer des Hausautomatisierungssystems zurück bezogen werden, d.h. rückpersonalisiert werden.

In einer Ausführungsform des ersten Aspekts der Erfindung wird beim Schritt des Übermitteins der elektronischen Daten mit den mittels des ersten kryptographischen Schlüssels verschleierten Daten an die Datenverwaltungsentität ferner ein Identifier des ersten kryptographischen Schlüssels, beispielsweise eine Schlüssel-ID, an die Datenveraltungsentität übermittelt.

In einer Ausführungsform des ersten Aspekts der Erfindung wird der Schritt des Verschleierns der mit dem Nutzer des Heimautomatisierungssystems assoziierbaren Daten der elektronischen Daten mittels des ersten kryptographischen Schlüssels durch das Hausautomatisierungssystem durchgeführt.

In einer Ausführungsform des ersten Aspekts der Erfindung wird der erste kryptographische Schlüssel und/oder der zweite kryptographische Schlüssel von einer Schlüsselverwaltungsentität bereitgestellt.

In einer Ausführungsform des ersten Aspekts der Erfindung wird der erste kryptographische Schlüssel von der Schlüsselverwaltungsentität dem Hausautomatisierungssystem bereitgestellt.

In einer Ausführungsform des ersten Aspekts der Erfindung wird der erste kryptographische Schlüssel von der Schlüsselverwaltungsentität dem Hausautomatisierungssystem zusammen mit dem Identifier des ersten kryptographischen Schlüssels bereitgestellt.

In einer Ausführungsform des ersten Aspekts der Erfindung umfasst das Verfahren den weiteren Schritt, dass das Hausautomatisierungssystem den Identifier des ersten kryptographischen Schlüssels als integralen Bestandteil in die elektronischen Daten einfügt, die an die Datenverwaltungsentität übermittelt werden.

In einer Ausführungsform des ersten Aspekts der Erfindung umfasst das Verfahren den weiteren Schritt, die elektronischen Daten mit den mittels des zweiten kryptographischen Schlüssels verschleierten Daten in einem Speicher der Datenverwaltungsentität zu speichern.

In einer Ausführungsform des ersten Aspekts der Erfindung werden beim Schritt des Übermitteins der elektronischen Daten mit den mittels des ersten kryptographischen Schlüssels verschleierten Daten von dem Heimautomatisierungssystem an die Datenverwaltungsentität die elektronischen Daten mit den mittels des ersten kryptographischen Schlüssels verschleierten Daten über eine Proxyentität an die Datenverwaltungsentität übermittelt, wobei die Proxyentität ausgebildet ist, wenigstens einen Identifier, insbesondere eine IP-Adresse, des Hausautomatisierungssystems in den elektronischen Daten zu verschleiern.

In einer Ausführungsform des ersten Aspekts der Erfindung umfasst der Schritt des Verschleierns der ermittelten Daten, die mit dem Nutzer des Hausautomatisierungssystems assoziierbar sind, mittels des ersten kryptographischen Schlüssels einen Schritt des Verschlüsselns der ermittelten Daten, die mit dem Nutzer des Hausautomatisierungssystems assoziierbar sind, mittels des ersten kryptographischen Schlüssels und/oder der Schritt des Verschleierns der mittels des ersten kryptographischen Schlüssels verschleierten Daten mittels des zweiten kryptographischen Schlüssels einen Schritt des Verschlüsselns der mittels des ersten kryptographischen Schlüssels verschleierten Daten mittels des zweiten kryptographischen Schlüssels. Insbesondere können beim Schritt des Verschleierns der ermittelten Daten, die mit dem Nutzer des Hausautomatisierungssystems assoziierbar sind, mittels des ersten kryptographischen Schlüssels oder beim Schritt des Verschleierns der mittels des ersten kryptographischen Schlüssels verschleierten Daten mittels des zweiten kryptographischen Schlüssels die Daten jeweils anonymisiert oder pseudonymisiert werden.

In einer Ausführungsform des ersten Aspekts der Erfindung umfasst das Verfahren vor dem Schritt des Verschleierns der mittels des ersten kryptographischen Schlüssels verschleierten Daten mittels des zweiten kryptographischen Schlüssels einen weiteren Schritt des Ermittelns der mittels des ersten kryptographischen Schlüssels verschleierten Daten der elektronischen Daten.

Gemäß einem zweiten Aspekt betrifft die Erfindung ein Hausautomatisierungssystem mit einem Prozessor und einer Kommunikationsschnittelle, wobei in dem Hausautomatisierungssystem elektronische Daten anfallen, wobei der Prozessor ausgebildet ist, Daten der elektronischen Daten, die mit einem Nutzer des Heimautomatisierungssystems assoziierbar sind, zu ermitteln und die mit dem Nutzer des Heimautomatisierungssystems assoziierbaren Daten der elektronischen Daten mittels eines ersten kryptographischen Schlüssels zu verschleiern, und wobei die Kommunikationsschnittstelle ausgebildet ist, die elektronischen Daten mit den mittels des ersten kryptographischen Schlüssels verschleierten Daten an eine Datenverwaltungsentität zu übermitteln.

Gemäß einem dritten Aspekt betrifft die Erfindung eine Datenverwaltungsentität mit einem Prozessor und einer Kommunikationsschnittstelle, wobei die Kommunikationsschnittstelle ausgebildet ist, elektronische Daten mit mittels eines ersten kryptographischen Schlüssels verschleierten Daten zu empfangen und die mittels des ersten kryptographischen Schlüssels verschleierten Daten mittels eines zweiten kryptographischen Schlüssels zu verschleiern.

Gemäß einem vierten Aspekt betrifft die Erfindung eine Schlüsselverwaltungsentität mit einem Prozessor und einer Kommunikationsschnittstelle, wobei der Prozessor ausgebildet ist, wenigstens einen ersten kryptographischen Schlüssel und wenigstens einen zweiten kryptographischen Schüssel zu generieren, und wobei die Kommunikationsschnittstelle ausgebildet ist, den ersten kryptographischen Schlüssel an ein Hausautomatisierungssystem zu übermitteln, um mit dem Nutzer des Heimautomatisierungssystems assoziierbaren Daten mittels des ersten kryptographischen Schlüssels zu verschleiern, und wobei die Kommunikationsschnittstelle ausgebildet ist, den zweiten kryptographischen Schlüssel an eine Datenverwaltungsentität zu übermitteln, um die mittels des ersten kryptographischen Schlüssels verschleierten Daten mittels des zweiten kryptographischen Schlüssels zu verschleiern.

Gemäß einem fünften Aspekt betrifft die Erfindung ein System zum Schutz von elektronischen Daten mit einem Heimautomatisierungssystem gemäß dem zweiten Aspekt der Erfindung, einer Datenverwaltungsentität gemäß dem dritten Aspekt der Erfindung und einer Schlüsselverwaltungsentität gemäß dem vierten Aspekt der Erfindung.

Weitere Ausführungsbeispiele werden Bezug nehmend auf die beiliegenden Zeichnungen erläutert. Es zeigen:
- Fig. 1: eine schematische Darstellung eines Verfahrens zum Schutz von vertraulichen elektronischen Daten, die in einem Hausautomatisierungssystem anfallen, gemäß einer Ausführungsform;
- Fig. 2: eine schematische Darstellung eines Systems zum Schutz von vertraulichen elektronischen Daten, die in einem Hausautomatisierungssystem anfallen, gemäß einer Ausführungsform;
- Fig. 3: eine schematische Darstellung eines Systems zum Schutz von vertraulichen elektronischen Daten, die in einem Hausautomatisierungssystem anfallen, gemäß einer Ausführungsform;
- Fig. 4: eine schematische Darstellung des Ablaufs eines Aspekts der Kommunikation in einem System zum Schutz von vertraulichen elektronischen Daten, die in einem Hausautomatisierungssystem anfallen, gemäß einer Ausführungsform;
- Fig. 5: eine schematische Darstellung des Ablaufs eines Aspekts der Kommunikation in einem System zum Schutz von vertraulichen elektronischen Daten, die in einem Hausautomatisierungssystem anfallen, gemäß einer Ausführungsform;
- Fig. 6: eine schematische Darstellung des Ablaufs eines Aspekts der Kommunikation in einem System zum Schutz von vertraulichen elektronischen Daten, die in einem Hausautomatisierungssystem anfallen, gemäß einer Ausführungsform; und
- Fig. 7: eine schematische Darstellung des Ablaufs eines Aspekts der Kommunikation in einem System zum Schutz von vertraulichen elektronischen Daten, die in einem Hausautomatisierungssystem anfallen, gemäß einer Ausführungsform.

In derfolgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

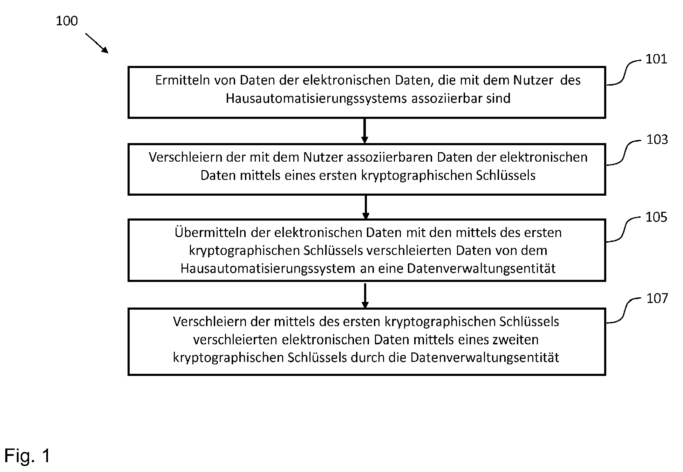

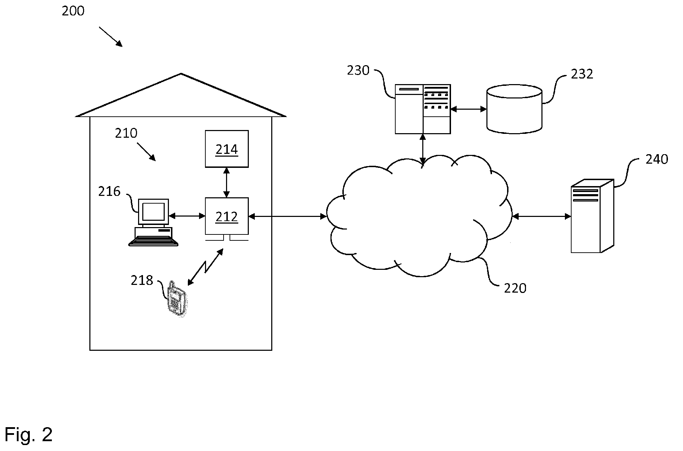

Figur 1 zeigt eine schematische Darstellung eines Verfahrens 100 zum Schutz von elektronischen Daten, die in einem Hausautomatisierungssystem anfallen, und personenbezogene, d.h. mit einer Person, insbesondere einem Nutzer des Hausautomatisierungssystems, assoziierbare Daten umfassen, gemäß einer Ausführungsform. Das Verfahren 100 sowie bevorzugte Ausführungsformen davon werden nachstehend unter Bezugnahme auf das in Figur 2 dargestellte System 200 zum Schutz von vertraulichen elektronischen Daten, die in einem Hausautomatisierungssystem anfallen, beschrieben.

Das System 200 umfasst im Wesentlichen ein Heimautomatisierungssystem 210, eine Datenverwaltungsentität 230, insbesondere einem Datenverwaltungsserver 230, und eine Schlüsselverwaltungsentität 240, insbesondere einem Schlüsselverwaltungsserver 240, wobei die einzelnen Elemente über ein Kommunikationsnetz 220, insbesondere das Internet, miteinander kommunizieren können.

Das Hausautomatisierungssystem 200 umfasst eine zentrale Steuereinheit in Form eines Home-Gateways 212, das in uni- oder bidirektionaler Kommunikation mit wenigstens einem Hausautomatisierungsgerät 214 beispielsweise in Form einer Waschmaschine steht, so dass das Home-Gateway 212 beispielsweise Steueranweisungen an das Hausautomatisierungsgerät 214 schicken kann und Nutzungsdaten beispielsweise in Form von Zustandsinformationen von diesem empfangen kann. Ferner kann das Home-Gateway kabelgebunden oder kabellos mit fest installierten oder mobilen Kommunikationsendgeräten 216, 218 des Nutzers des Hausautomatisierungssystems 210 kommunizieren.

Das in Figur 1 dargestellte Verfahren 100 umfasst einen Schritt 101 des Ermittelns von Daten der elektronischen Daten, die mit dem Nutzer des Heimautomatisierungssystems 210 assoziierbar sind, was beispielsweise mittels geeigneter Such- und/oder Filteralgorithmen durchgeführt werden kann. Bei den mit dem Nutzer des Hausautomatisierungssystems 210 assoziierbaren Daten kann es sich beispielsweise um einen Namen, eine Identifikationsnummer, eine Telefonnummer, eine E-Mail-Adresse, eine Kundennummer des Nutzers und/oder ein anderes Datenelement handeln, das zur Identifizierung des Nutzers des Hausautomatisierungssystems 210 geeignet ist. Die elektronischen Daten können beispielsweise in Form einer Vielzahl von elektronischen Dokumenten, d.h. Files, vorliegen und/oder einem kontinuierlichen Datenstrom entstammen.

Das Verfahren 100 umfasst ferner einen Schritt 103 des Verschleierns der mit dem Nutzer des Heimautomatisierungssystems 210 assoziierbaren Daten der elektronischen Daten mittels eines ersten kryptographischen Schlüssels. Gemäß einer Ausführungsform kann das Verschleiern durch ein Verschlüsseln der mit dem Nutzer des Heimautomatisierungssystems 210 assoziierbaren Daten der elektronischen Daten mittels des ersten kryptographischen Schlüssels erfolgen, wodurch die mit dem Nutzer des Heimautomatisierungssystems 210 assoziierbaren Daten der elektronischen Daten anonymisiert oder pseudonymisiert werden können.

Das Verfahren 100 umfasst ferner einen Schritt 105 des Übermitteins der elektronischen Daten mit den mittels des ersten kryptographischen Schlüssels verschleierten Daten von dem Heimautomatisierungssystem 210 an die Datenverwaltungsentität 230.

Das Verfahren 100 umfasst ferner einen Schritt 107 des Verschleierns der mittels des ersten kryptographischen Schlüssels verschleierten Daten mittels eines zweiten kryptographischen Schlüssels durch die Datenverwaltungsentität 230. Gemäß einer Ausführungsform kann das Verschleiern durch ein Verschlüsseln der mittels des ersten kryptographischen Schlüssels verschleierten Daten mittels des zweiten kryptographischen Schlüssels durch die Datenverwaltungsentität 230 erfolgen.

Gemäß einer Ausführungsform kann beim Übermitteln der elektronischen Daten mit den mittels des ersten kryptographischen Schlüssels verschleierten Daten an die Datenverwaltungsentität 230 ferner ein Identifier des ersten kryptographischen Schlüssels, beispielsweise eine Schlüssel-ID des ersten kryptographischen Schlüssels, an die Datenveraltungsentität 230 übermittelt werden.

Gemäß einer Ausführungsform kann das Verschleiern der mit dem Nutzer des Heimautomatisierungssystems 210 assoziierbaren Daten der elektronischen Daten mittels des ersten kryptographischen Schlüssels durch das Hausautomatisierungssystem 210, insbesondere das Home-Gateway 212, durchgeführt werden. Hierzu kann das Home-Gateway 212 einen entsprechend ausgebildeten Prozessor und/oder ein entsprechend ausgebildetes Software-Modul aufweisen.

Gemäß einer Ausführungsform können der erste kryptographische Schlüssel und/oder der zweite kryptographische Schlüssel von der Schlüsselverwaltungsentität 240 bereitgestellt werden. Dabei kann der erste kryptographische Schlüssel von der Schlüsselverwaltungsentität 240 dem Hausautomatisierungssystem 210, insbesondere dem Home-Gateway 212, bereitgestellt werden.

Gemäß einer Ausführungsform kann der erste kryptographische Schlüssel von der Schlüsselverwaltungsentität 240 dem Hausautomatisierungssystem 210, insbesondere dem Home-Gateway 212, zusammen mit dem Identifier des ersten kryptographischen Schlüssels bereitgestellt werden.

Gemäß einer Ausführungsform kann das Hausautomatisierungssystem 210, insbesondere das Home-Gateway 212, ausgebildet sein, den Identifier des ersten kryptographischen Schlüssels als integralen Bestandteil in die elektronischen Daten einzufügen, die an die Datenverwaltungsentität 230 übermittelt werden.

Gemäß einer Ausführungsform können die elektronischen Daten mit den mittels des zweiten kryptographischen Schlüssels verschleierten Daten in einem Speicher 232, insbesondere einer Datenbank 232, der Datenverwaltungsentität 230 gespeichert werden.

Gemäß einer Ausführungsform können die elektronischen Daten mit den mittels des ersten kryptographischen Schlüssels verschleierten Daten von dem Hausautomatisierungssystem 210, insbesondere dem Home-Gateway 212, über eine in Figur 2 nicht dargestellte Proxyentität, insbesondere einen Proxy-Server an die Datenverwaltungsentität 230 übermittelt werden, wobei die Proxyentität ausgebildet ist, wenigstens einen Identifier, insbesondere eine IP-Adresse, des Hausautomatisierungssystems 210 in den elektronischen Daten zu verschleiern.

Gemäß einer Ausführungsform können vor dem Verschleiern der mittels des ersten kryptographischen Schlüssels verschleierten Daten mittels des zweiten kryptographischen Schlüssels die mittels des ersten kryptographischen Schlüssels verschleierten Daten der elektronischen Daten von der Datenverwaltungsentität 230 ermittelt werden.

Nachstehend werden weitere Ausführungsformen des Verfahrens 100 und des Systems 200 beschrieben.

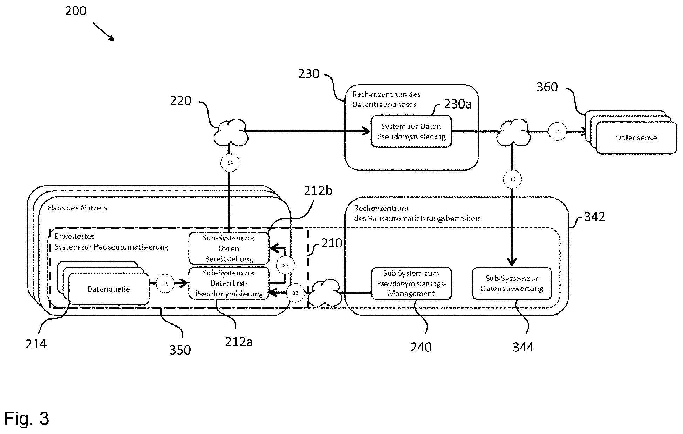

Figur 3 zeigt eine schematische Darstellung einer weiteren Ausführungsform des Systems 200 zum Schutz von vertraulichen elektronischen Daten. Bei dieser Ausführungsform umfasst das Home-Gateway 212 des Hausautomatisierungssystems 210 ein Sub-System zur Daten-Erst-Pseudonymisierung 212a und ein Sub-System zur Daten-Bereitstellung 212b. Hierbei kann es sich beispielsweise um auf dem Home-Gateway 212 ablaufende Software-Module oder auch um eigenständige Hardware-Module handeln.

Bei der in Figur 3 gezeigten Ausführungsform ist das Hausautomatisierungssystem 210 Teil eines erweiterten Systems zur Hausautomatisierung 350, das neben dem Hausautomatisierungssystem 210 auch die Schlüsselverwaltungsentität 240 umfassen kann, die bei der in Figur 3 dargestellten Ausführungsform als Sub-System zum Pseudonymisierungsmanagement 240 ausgebildet ist. Das Sub-System zum Pseudonymisierungsmanagement 240 ist neben einem Sub-System zur Datenauswertung 344 auf einer Serverinfrastruktur bzw. einem Rechenzentrum 342 des Betreibers des Hausautomatisierungssystems 210 implementiert. Mit anderen Worten: gemäß einer Ausführungsform kann sich das erweiterte System zur Hausautomatisierung 350 auf zwei Standorte verteilen, nämlich auf das Hausautomatisierungssystem 210 des Nutzers und auf das Rechenzentrum 342 des Hausautomatisierungsbetreibers. Während es genau ein zentrales Rechenzentrum 342 des Hausautomatisierungsbetreibers geben kann, kann es viele Hausautomatisierungssysteme 210 geben, nämlich jeweils eines in jedem Haus eines Nutzers.

Wie vorstehend bereits beschrieben, erfolgt bei den erfindungsgemäßen Verfahren und Systemen die (erste) Pseudonymisierung von Daten bereits im Hausautomatisierungssystem 210 des Nutzers. Damit kommt schon der Treuhänder 230 nicht mehr mit den ursprünglichen, personenbezogenen Daten in Berührung. Er kann den Bezug auf eine Person nicht mehr alleine wiederherstellen. Die erfindungsgemäßen Verfahren und Systeme werden somit dem Anspruch des Nutzers auf die Pseudonymität seiner Daten beim Datentreuhänder 230 gerecht.

Danach pseudonymisiert, wie vorstehend bereits beschrieben, der Treuhänder 230 die bereits erst-pseudonymisierten Daten ein zweites Mal. Damit können die Daten nun auch für den Betreiber des Hausautomatisierungssystems 210 als pseudonymisiert betrachtet werden. Der Betreiber des Hausautomatisierungssystems kann den Bezug auf eine Person nicht mehr alleine wiederherstellen. Die erfindungsgemäßen Verfahren und Systeme werden dem Anspruch des Nutzers auf die Pseudonymität seiner Daten beim Betreiber des Hausautomatisierungssystems gerecht.

Dennoch kann im Rahmen der erfindungsgemäßen Verfahren und Systeme gegebenenfalls auf die personenbezogenen Daten zurückgeschossen werden. Die erfindungsgemäßen Verfahren und Systeme werden damit auch dem Anspruch auf ein ggf. notwendiges Wiederherstellen des Bezugs auf eine Person gerecht.

Während es herkömmlicherweise der Treuhänder 230 ist, der alleine für einen Anfragenden in den Daten den Bezug auf eine Person wiederherstellen kann, ist dies unter Verwendung der erfindungsgemäßen Verfahren und Systeme dem Treuhänder 230 alleine nicht mehr alleine möglich. Die erfindungsgemäßen Verfahren und Systeme werden dem Anspruch des Kunden auf die Pseudonymität seiner Daten in besonderem Maße gerecht.

Bei den in Figur 3 gezeigten Datenquellen 214 kann es sich beispielsweise um Sensoren oder Aktoren handeln. Ein Beispiel für einen Sensor ist z.B. ein Thermometer. Es kann die aktuelle Temperatur messen und in das Hausautomatisierungssystem 210 einspeisen. Aktoren können von Nutzern auch ohne Zutun des Hausautomatisierungssystems 210 z.B. geschaltet werden. Ein Beispiel dafür ist das Betätigen eines Lichtschalters. Ein Aktor ist insofern ebenfalls eine Datenquelle 214, als dass sie melden kann, wann, welcher Schalter wie geschaltet wurde.

Die Daten aus den Datenquellen 214, wie Sensoren oder Aktoren, werden von dem Hausautomatisierungssystem 210 verarbeitet. Sie fließen z.B. in Regelwerke ein um, gemäß den Regeln weitere Maßnahmen, wie z.B. das automatische Schalten von weiteren Aktoren abzuleiten. Ein Heizungssteller stellt dann z.B. als Aktor auf Anweisung durch das Hausautomatisierungssystem 210 eine gewünschte Temperatur am Heizkörper ein. Die Daten aus den Datenquellen 214, wie Sensoren oder Aktoren, werden als personenbezogen betrachtet.

Bei der in Figur 3 dargestellten Ausführungsform geschieht die Bereitstellung der im Hausautomatisierungssystem 210 anfallenden Daten an Systeme außerhalb des Hausautomatisierungssystems 210 über das Sub-System zur Daten Bereitstellung 212b. Bei der in Figur 3 dargestellten Ausführungsform nimmt das Sub-System zur Daten-Erst-Pseudonymisierung 212a die von den Datenquellen 214 stammenden, personenbezogenen Daten entgegen (siehe Aktion 21). Das Sub-System zur Daten-Erst-Pseudonymisierung 212a erkennt die personenbezogenen Bestandteile in den von den Datenquellen 214 gelieferten Datensätzen und pseudonymisiert diese personenbezogenen Bestandteile. Nicht personenbezogene Bestandteile in den gelieferten Datensätzen bleiben unverändert. Schließlich reicht das Sub-System zur Daten-Erst-Pseudonymisierung 212a die erst-pseudonymisierten Daten an das Sub-System zur Daten-Bereitstellung 212b weiter (siehe Aktion 23).

Wie bereits vorstehend beschrieben, kann die Pseudonymisierung im Sub-System zur Daten-Erst-Pseudonymisierung 212a unter Verwendung eines Verschlüsselungsverfahrens erfolgen. Die genaue Ausprägung des verwendeten Verschlüsselungsverfahrens ist für die vorliegende Erfindung unwesentlich. Verschlüsselungsverfahren im Sinne dieser Erfindung sind zum Beispiel symmetrische oder asymmetrische Verschlüsselungsverfahren.

Wie bereits vorstehend im Zusammenhang mit der Schlüsselverwaltungsentität 240 beschrieben, ist das Sub-System zum Pseudonymisierungsmanagement 240, bei dem es sich um eine Ausführungsform der Schlüsselverwaltungsentität 240 von Figur 2 handelt, ausgebildet, einen neuen Schlüssel sowie einen zu diesem Schlüssel dazugehörigen Identifier, insbesondere eine Schlüssel-ID, zu generieren und zu speichern. Ferner kann es dazu ausgebildet sein, gegen Vorlage einer Schlüssel-ID den dazugehörigen Schlüssel ausliefern. Gemäß einer Ausführungsform realisiert das Sub-System zum Pseudonymisierungsmanagement 240 somit insbesondere die Funktion eines "Key Escrow"-Agenten.

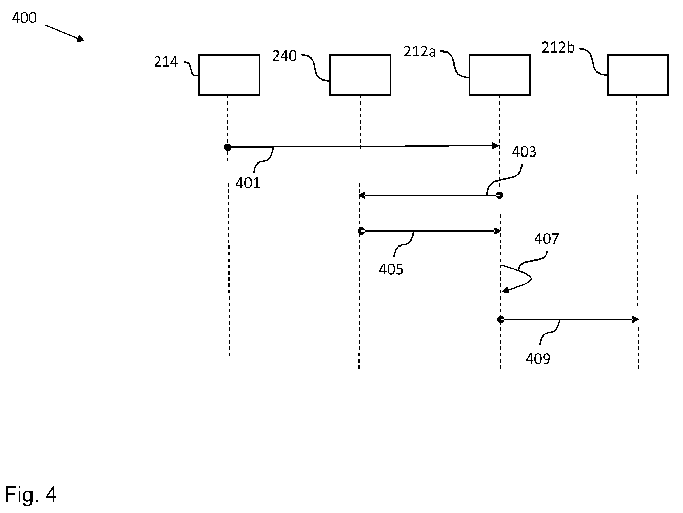

Unter weiterer Bezugnahme auf die Figuren 4 bis 7 werden nachstehend die Funktionsweise der in Figur 3 dargestellten Elemente und eine Ausführungsform des Verfahrens 100 zum Schutz von vertraulichen elektronischen Daten beschrieben, die auf der in Figur 3 dargestellten Ausführungsform des Systems 200 basiert. Gemäß einer Ausführungsform kann das Verfahren im Wesentlichen die folgenden Abschnitte umfassen: einem ersten Abschnitt des Erst-Pseudonymisierens von Daten; einem zweiten Abschnitt des erneuten Pseudonymisierens und Verwendens der Daten und einem dritten Abschnitt des Wiederherstellens des Bezugs auf eine Person in den Daten.

Vor dem ersten Abschnitt befindet sich das System 200 zur verteilten Pseudonymisierung im normalen Betriebszustand. Die Datenquelle 214 liefert personenbezogene Daten, die vom Sub-System zur Daten-Erst-Pseudonymisierung 212a im ersten Abschnitt erst-pseudonymisiert werden. Die Daten können nach dem Durchlaufen dieses ersten Abschnitts für alle Datensenken, mit Ausnahme des Sub-Systems zur Datenauswertung 344 als einem Sub-System des Erweiterten Systems zur Hausautomatisierung 350 als pseudonymisiert betrachtet werden.

Die Figur 4 zeigt einen ersten Abschnitt 400 des Verfahrens 100 gemäß einer Ausführungsform. Der erste Abschnitt 400 des Verfahrens 100 umfasst im Einzelnen die folgenden Schritte.

### 401: sendData (personalizedData)

Die Datenquelle 214 sendet personenbezogene Daten an das Sub-System zur Daten-Erst-Pseudonymisierung 212a.

### 403: getNewKey.req ()

Das Sub-System zur Daten-Erst-Pseudonymisierung 212a erfragt beim Sub-System zum Pseudonymisierungsmanagement 240 einen neuen Schlüssel.

Für die spätere Verwertung der Daten kann es wichtig sein, wie oft die bei der Pseudonymisierung verwendeten Schlüssel gewechselt werden. Ein zu häufiges Wechseln des Schlüssels kann z.B. das Pseudonym, das die Daten eines pseudonymen Nutzers zusammenhält, unbrauchbar machen. Auch handelt es sich bei der Generierung eines jeden Schlüssels um eine "kostspielige" Operation, deren zu häufiges Aufrufen vermieden werden sollte.

Für das hier beschriebene Verfahren als solches spielt die Häufigkeit des Schlüsselwechsels aber keine Rolle. Ausführungsformen der Erfindung sehen einen Schlüsselwechsel bei jedem einzelnen Aufruf vor.

### 405: getNewKey.res (key, keyld)

Das Sub-System zum Pseudonymisierungsmanagement 240 liefert dem Sub-System zur Daten-Erst-Pseudonymisierung 212a einen Schlüssel zum Erst-Pseudonymisieren der personenbezogenen Daten sowie eine dazugehörige Schlüssel-ID.

### 407: firstPseudonymize (personalizedData, key)

Das Sub-System zur Daten-Erst-Pseudonymisierung 212a erst-pseudonymisiert die Daten mit dem Schlüssel.

Für das hier beschriebene Verfahren als solches spielt es keine Rolle, welche Teile eines Datensatzes mit Nutzungsdaten pseudonymisiert werden. Teile eines Datensatzes, die pseudonymisiert werden können, sind z.B. Name des Nutzers, Ort der Nutzung, Zeit der Nutzung, das genutzte Gerät und die Art der Nutzung des genutzten Geräts. Gemäß Ausführungsformen der Erfindung können Namen in Abhängigkeit eines Anwendungsfalls stets pseudonymisiert werden, wohingegen Ortsangaben in Abhängigkeit eines Anwendungsfalls nur teil-pseudonymisiert werden können. Eine Teilpseudonymisierung könnte z.B. durch das "Abschneiden" von hinteren Stellen der Geo-Koordinaten verwirklicht werden. In Abhängigkeit eines Anwendungsfalls können Informationen, wie Uhrzeit, genutztes Gerät und die Art der Nutzung des Geräts, unter Umständen unverändert in den elektronischen Daten beibehalten werden.

### 409: sendData (firstPseudonymizedData, keyld)

Die erst-pseudonymisierten Daten werden gemeinsam mit der Schlüssel-ID an das Sub-System zur Datenbereitstellung 212b geliefert.

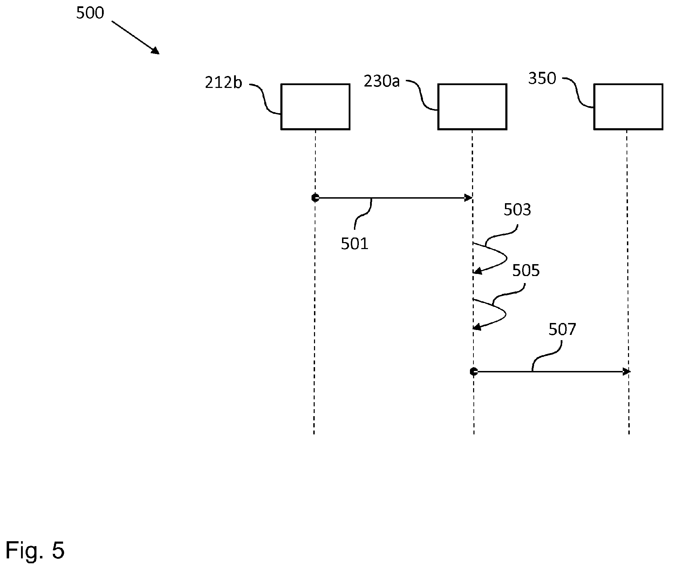

Die Figur 5 zeigt einen zweiten Abschnitt 500 des Verfahrens 100 gemäß einer Ausführungsform.

Das Sub-System zur Datenbreistellung 212b des Hausautomatisierungssystems 210 liefert erst-pseudonymisierte Daten zusammen mit der Schlüssel-ID des Schlüssels, mit dem die erst-pseudonymisierten Daten erst-pseudonymisiert wurden, an das System zur Daten-Pseudonymisierung 230a, das bei der in Figur 3 dargestellten Ausführungsform als Teil der Datenverwaltungsentität in Form eines Systems innerhalb eines Rechenzentrums eines Treuhänders 230 ausgebildet ist. Dort werden die erst-pseudonymisierten Daten ein zweites Mal pseudonymisiert. Die Daten können nach dem Durchlaufen dieses Schrittes innerhalb des zweiten Abschnitts für alle Datensenken, und insbesondere auch für das Sub-System zur Datenauswertung 344 des Erweiterten Systems zur Hausautomatisierung 350 als pseudonymisiert betrachtet werden. Die Schlüssel-ID kann zusammen mit den pseudonymisierten Daten persistiert werden. Die ein zweites Mal pseudonymisierten Daten können an Datensenken 360 übermittelt werden, beispielsweise einen Verwerter 360, der die pseudonymisierten Daten auswerten möchte.

Gemäß einer Ausführungsform können bei der Erst-Pseudonymisierung durch das Sub-System zur Erst-Pseudonymisierung 212a und bei der Pseudonymisierung durch das System zur Daten Pseudonymisierung 230a die gleichen Verschlüsselungsverfahren angewendet werden. Gemäß Ausführungsformen der Erfindung verwenden dabei beide Systeme, d.h. das Sub-System zur Daten-Erst-Pseudonymisierung 212a und das System zur Daten-Pseudonymisierung 230a unterschiedliche Schlüssel. Das System zur Daten-Pseudonymisierung 230a hat somit zu keinem Zeitpunkt Kenntnis über den Schlüssel, der vom Sub-System zur Daten-Erst-Pseudonymisierung 212a verwendet wird. Das gleiche gilt umgekehrt, d.h. das Sub-System zur Daten-Erst-Pseudonymisierung 212a hat zu keinem Zeitpunkt Kenntnis über den Schlüssel, der vom System zur Daten-Pseudonymisierung 230a verwendet wird.

Der zweite Abschnitt 500 des Verfahrens 100 umfasst im Einzelnen die folgenden Schritte.

### 501: sendData (firstPseudonymizedData, keyld)

Die erst-pseudonymisierten Daten werden gemeinsam mit der Schlüssel-ID von dem Sub-System zur Datenbereitstellung 212b an das System zur Daten-Pseudonymisierung 230a übermittelt.

### 503: pseudonymize ()

Die erst-pseudonymisierten Daten werden vom System zur Daten-Pseudonymisierung 230a ein zweites Mal pseudonymisiert.

### 505: storeKeyld (pseudonymizedData, keyld)

Die ein zweites Mal pseudonymisierten Daten werden zusammen mit der Schlüssel-ID vom System zur Daten-Pseudonymisierung 230a persistiert, beispielsweise in einer Datenbank hinterlegt.

### 507: sendData (pseudonymizedData)

Die ein zweites Mal pseudonymisierten Daten werden vom System zur Daten-Pseudonymisierung 230a an die Datensenken 360 übermittelt. Insbesondere kann das Sub-System zur Datenauswertung 344 des Erweiterten Systems zur Hausautomatisierung 350 eine dieser Datensenken sein.

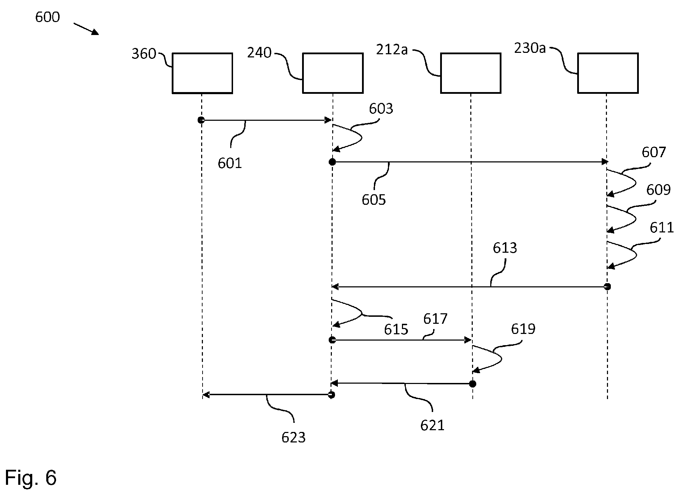

Die Figur 6 zeigt einen dritten Abschnitt 600 des Verfahrens 100 gemäß einer Ausführungsform.

Ein Datenverwerter 360 möchte aus gegeben Gründen, dass durch das System zur Daten-Pseudonymisierung 230a zweit-pseudonymisierte Daten wieder in eine personenbezogene Form überführt werden, d.h. in eine Form, in der sich der Bezug zum Nutzer des Hausautomatisierungssystems 210 wiederherstellen lässt. Dazu übermittelt der Datenverwerter 360 die zweit-pseudonymisierten Daten an das Sub-System zum Pseudonymisierungsmanagement 240.

Das Pseudonymisierungsmanagement 240 autorisiert die Anforderung des Datenverwerters 360 auf eine Rück-Personalisierung der Daten. Die Autorisierung kann an dieser Stelle systemweit für das erweiterte System zur Hausautomatisierung 350 stattfinden. Denkbar ist hier z.B. eine automatisierte Entscheidung auf Basis eines Regelwerks. Denkbar ist auch z.B. die Erzeugung einer Entscheidungsvorlage in Form eines Mensch-Maschinen Dialogs (GUI), die einer natürlichen Person zur Entscheidung übergeben wird. Die natürliche Person speist die Entscheidung wiederum in den elektronischen Prozess ein.

Das Sub-System zum Pseudonymisierungsmanagement 240 übermittelt dann im Falle der erfolgten Autorisierung die pseudonymisierten Daten an das System zur Daten-Pseudonymisierung 230a. Auch das System zur Daten-Pseudonymisierung 230a autorisiert zunächst die Rück-Personalisierung der Daten. Bei erfolgter Autorisierung wird die zu den pseudonymisierten Daten gehörige und bei der Pseudonymisierung hinterlegte Schlüssel-ID aus der Datenbank 232 herausgelesen. Danach werden die pseudonymisierten Daten in die erst-pseudonymisierten Daten rück-personalisiert. Die vom System zur Daten-Pseudonymisierung 230a rück-personalisierten Daten, die den erst-pseudonymisierten Daten entsprechen, sowie die Schlüssel-ID werden an das Sub-System zum Pseudonymisierungsmanagement 240 zurückgeliefert.

Das Sub-System zum Pseudonymisierungsmanagement 240 ermittelt dann aus der vom Sub-System zur Daten-Pseudonymisierung 230a erhaltenen Schlüssel-ID den Schlüssel. Der ermittelte Schlüssel und die vom Sub-System zur Daten-Pseudonymisierung 230a erhaltenen rück-personalisierten Daten, die den erst-pseudonymisierten Daten entsprechen, werden an das Sub-System zur Daten-Erst-Pseudonymisierung 212a übermittelt. Das Sub-System zur Daten-Erst-Pseudonymisierung 212a rück-personalisiert unter Zuhilfenahme des Schlüssels die personenbezogenen Daten. Die personenbezogenen Daten werden an das Sub-System zum Personalisierungsmanagement 240 zurückgegeben. Das Sub-System zum Personalisierungsmanagement 240 übergibt die Daten schließlich an den Datenverwerter 360.

Der dritte Abschnitt 600 des Verfahrens 100 umfasst im Einzelnen die folgenden Schritte.

### 601: rePersonalizeData (personalizedData)

Die pseudonymisierten Daten werden vom Datenverwerter 360an das Sub-System zum Pseudonymisierungsmanagement 240 übergeben.

### 603: authorizeRePersonalization ()

Die Rück-Personalisierung der Daten durch das Sub-System zum Pseudonymisierungsmanagement 240 wird autorisiert.

### 605: rePersonalizeData.req (pseudonymizedData)

Das System zur Daten-Pseudonymisierung 230a wird mit der Rück-Personalisierung der pseudonymisierten Daten beauftragt.

### 607: authorizeRePersonalization ()

Die Rück-Personalisierung der Daten durch das System zur Daten-Pseudonymisierung 230a wird autorisiert.

### 609: retrieveKeyld (pseudonymizedData)

Die bei der Pseudonymisierung der ursprünglichen, erst-pseudonymisierten Daten abgespeicherte Schlüssel-ID wird herausgesucht.

### 611: rePersonalizeData (pseudonymizedData)

Das System zur Daten-Pseudonymisierung 230a rück-personalisiert die pseudonymisierten Daten.

### 613: rePersonalizeData.res (firstPseudonymizedData, keyld)

Das System zur Daten-Pseudonymisierung 230a übermittelt die Schlüssel-ID und die rück-personalisierten Daten, die den erst-pseudonymisierten Daten entsprechen, an das Sub-System zum Pseudonymisierungsmanagement 240.

### 615: retrieveKey (keyld)

Das Sub-System zum Pseudonymisierungsmanagement 240 ermittelt den zu der Schlüssel-ID passenden Schlüssel.

### 617: rePersonalizeDate.req (firstPseudonymizedData, key)

Das Sub-System zum Pseudonymisierungsmanagement 240 übermittelt den Schlüssel und die durch das System zur Daten-Pseudonymisierung 230a rück-personalisierten erst-pseudonymisierten Daten, die den erst-pseudonymisierten Daten entsprechen, an das Sub-System zur Daten-Erst-Pseudonymisierung 212a.

### 619: rePersonalizeData (firstPseudonymizedData, key)

Das Sub-System zur Daten-Erst-Pseudonymisierung 212a rück-pseudonymisiert mittels des Schlüssels die durch das System zur Daten-Pseudonymisierung 230a rück-personalisierten Daten, die den erst-pseudonymisierten Daten entsprechen, zurück zu den ursprünglichen personalisierten Daten.

### 621: rePersonalizeDate.res (personalizedData)

Das Sub-System zur Daten-Erst-Pseudonymisierung 212a übermittelt die personalisierten Daten an das Sub-System zum Pseudonymisierungsmanagement 240.

### 623: rePersonalizeDate.res (personalizedData)

Das Sub-System zum Pseudonymisierungsmanagement 240 übermittelt die personalisierten Daten an den Datenverwerter 360.

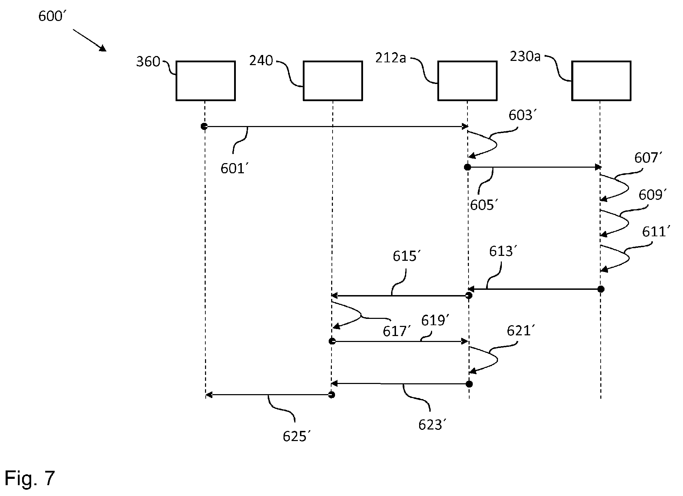

Bei dem in Figur 6 dargestellten dritten Abschnitt 600 des Verfahrens 100 gemäß einer Ausführungsform wird die Rück-Pseudonymisierung durch das Sub-System zum Pseudonymisierungsmanagement 240 angestoßen. Dies stellt lediglich eine spezielle Ausführungsform des Systems 200 und des Verfahrens 100 dar. In anderen vorteilhaften Ausführungsformen des Systems 200 und des Verfahrens 100 kann der Anstoß zur Rück-Pseudonymisierung durch das Sub-System zur Daten-Erst-Pseudonymisierung 212a, also durch das Home-Gateway 212, erfolgen. Eine entsprechende Variante ist in Figur 7 dargestellt, wobei die in Figur 7 dargestellten Schritte 601' bis 625' im Wesentlichen den in Figur 6 dargestellten und vorstehend im Detail beschriebenen Schritten 601 bis 623 entsprechen Die in Figur 7 dargestellte Variante hat insbesondere den Vorteil, dass das Sub-System zum Pseudonymisierungsmanagement 240 zu keinem Zeitpunkt mit Nutzungsdaten, sei es in pseudonymisierter oder in nicht pseudonymisierter Form, in Berührung kommt.

Bei den vorstehend im Zusammenhang mit den Figuren 3 bis 7 beschriebenen Ausführungsformen des Verfahrens 100 und des Systems 200 werden die personenbezogenen Daten pseudonymisiert. Dies stellt jedoch lediglich eine spezielle Ausführungsform von System und Verfahren dar. In anderen Ausführungsformen können die personenbezogenen Daten auch auf andere Art und Weise verschleiert, z.B. anonymisiert, werden.

Bei den vorstehend im Zusammenhang mit den Figuren 3 bis 7 beschriebenen Ausführungsformen des Verfahrens 100 und des Systems 200 fordert das Sub-System zur Daten-Erst-Pseudonymisierung 212a jedes Mal einen neuen Schlüssel an. Dies stellt jedoch lediglich spezielle Ausführungsformen dar. In einer anderen Ausführungsform kann das Sub-System zur Daten-Erst-Pseudonymisierung 212a auf das Anfordern eines neuen Schlüssels verzichten und stattdessen einen bereits angefragten, vorteilhafter Weise den letzten, angefragten Schlüssel mit der dazugehörenden Schlüssel-ID wiederverwenden.

Gemäß einer weiteren Alternative kann das Sub-System zum Pseudonymisierungsmanagement 240 auf die Anfrage zur Generierung eines neuen Schlüssels mit dem Rücksenden eines bereits angefragten, vorteilhafter Weise dem letzten, angefragten Schlüssel mit der dazugehörenden Schlüssel-ID antworten.

Bei den vorstehend im Zusammenhang mit den Figuren 3 bis 7 beschriebenen Ausführungsformen des Verfahrens 100 und des Systems 200 werden alle Teile eines Datensatzes pseudonymisiert. Dies stellt jedoch lediglich spezielle Ausführungsformen dar. In einer anderen Ausführungsform können verschiedene Teildaten eines Datensatzes mit Nutzungsdaten dem Anwendungsfall angemessen jeweils pseudonymisiert, teil-pseudonymisiert oder unverändert belassen werden.

Bei den vorstehend im Zusammenhang mit den Figuren 3 bis 7 beschriebenen Ausführungsformen des Verfahrens 100 und des Systems 200 wird das Rechenzentrum 342 des Betreibers des Hausautomatisierungssystems 210 als ein zentrales System beschrieben. Dies stellt jedoch lediglich spezielle Ausführungsformen dar. In einer anderen Ausführungsform kann das Rechenzentrum 342 auch dezentral über viele Standorte verteilt vorliegen.
Bei den vorstehend im Zusammenhang mit den Figuren 3 bis 7 beschriebenen Ausführungsformen des Verfahrens 100 und des Systems 200 werden Sensoren und Aktoren 214 so beschrieben, dass sie sich im Haus des Nutzers befinden müssen. Dies stellt jedoch lediglich spezielle Ausführungsformen dar. In einer anderen Ausführungsform können sich Sensoren und Aktoren 214 auch an anderen Orten befinden. Andere Orte können z.B. Garten und nähere Umgebung des Hauses sein. Andere Orte, wie z.B. ein Ferienhaus können aber auch entfernt sein. Weitere Orte, wie z.B. ein Auto können in variabler Entfernung zum Haus des Nutzers sein. Im Rahmen der vorliegenden Erfindung ist es dabei lediglich wesentlich, dass es sich bei den Daten um personenbezogene Daten handelt.

Bei den vorstehend im Zusammenhang mit den Figuren 3 bis 7 beschriebenen Ausführungsformen des Verfahrens 100 und des Systems 200 werden Sensoren und Aktoren 214 als die einzigen Datenquellen genannt. Dies stellt jedoch lediglich spezielle Ausführungsformen dar. In einer anderen Ausführungsform können Datenquellen auch von anderer Natur sein. Für das Verfahren ist es dabei lediglich von Relevanz, dass es sich bei den Daten um personenbezogene Daten handelt.

Bei den vorstehend im Zusammenhang mit den Figuren 3 bis 7 beschriebenen Ausführungsformen des Verfahrens 100 und des Systems 200 werden die Daten aus den Datenquellen 214, wie Sensoren oder Aktoren, anderen Systemen sofort zur Verarbeitung bereitgestellt. Dies stellt jedoch lediglich spezielle Ausführungsformen dar. In einer anderen Ausführungsform können diese Daten auch zeitnah oder zeitversetzt zur Verfügung gestellt werden. In diesem Fall können die Daten zwischengespeichert werden.

Bei den vorstehend im Zusammenhang mit den Figuren 3 bis 7 beschriebenen Ausführungsformen des Verfahrens 100 und des Systems 200 wird das Internet zur Datenübertragung zwischen räumlich getrennten Systemen verwendet. Dies stellt jedoch lediglich spezielle Ausführungsformen dar. In einer anderen Ausführungsform können diese Daten auch über andere geeignete Kommunikationswege z.B. Intranet, Punkt-zu-Punkt Verbindungen, Standleitungen etc. übermittelt werden.

Bei den vorstehend im Zusammenhang mit den Figuren 3 bis 7 beschriebenen Ausführungsformen des Verfahrens 100 und des Systems 200 wird der Schlüssel und die dazugehörige Schlüssel-ID vom Sub-System zum Pseudonymisierungsmanagement 240 aufbewahrt. Dies stellt jedoch lediglich spezielle Ausführungsformen dar. In einer anderen Ausführungsform können der Schlüssel und die Schlüssel-ID in einem separaten Schlüssel-Repository aufbewahrt werden. Das Schlüssel-Repository kann weiterreichende Sicherheitsanforderungen erfüllen.

Bei den vorstehend im Zusammenhang mit den Figuren 3 bis 7 beschriebenen Ausführungsformen des Verfahrens 100 und des Systems 200 ist es jeweils "das eine" System, dass die Daten "dem anderen" System pro aktiv anliefert. Das proaktive Anliefern von Daten wird häufig als ein "Push"-Vorgang bezeichnet. Dies stellt jedoch lediglich spezielle Ausführungsformen dar. In einer anderen Ausführungsform können diese Daten auch von "dem anderen" bei "dem einen" System angefordert werden. Das Anfordern von Daten wird häufig als ein "Push"-Vorgang bezeichnet.

Bei den vorstehend im Zusammenhang mit den Figuren 3 bis 7 beschriebenen Ausführungsformen des Verfahrens 100 und des Systems 200 wird die Schlüssel-ID jeweils als separater Parameter vom Subsystem zur Daten-Erst-Pseudonymisierung 212a über die Daten-Breitstellung explizit neben den erst-pseudonymisierten Daten an das System zur Daten-Pseudonymisierung 230a übermittelt. Es obliegt dann dem System zur Daten-Pseudonymisierung 230a die Relation zwischen den erst-pseudonymisierten Daten und der Schlüssel-ID herzustellen und beizubehalten. Dies stellt jedoch lediglich spezielle Ausführungsformen dar. In einer anderen Ausführungsform kann die Schlüssel-ID auch vom Subsystem zur Daten-Erst-Pseudonymisierung 212a in die erst-pseudonymisierten Daten eingearbeitet werden. Die Schlüssel-ID ist dabei ein Datum, das als nicht personenbezogen betrachtet wird und folglich auch nicht pseudonymisiert wird. Es bleibt stattdessen im Klartext als Teil der erst-pseudonymisierten Daten vorhanden.

Bei den vorstehend im Zusammenhang mit den Figuren 3 bis 7 beschriebenen Ausführungsformen des Verfahrens 100 und des Systems 200 wird vom Sub-System zur Daten-Erst-Pseudonymisierung 212a für jeden neuen, zu pseudonymisierenden Datensatz vom Sub-System zum Pseudonymisierungsmanagement 240 ein neuer Schlüssel angefragt. Dies stellt jedoch lediglich spezielle Ausführungsformen dar. In einer anderen Ausführungsform kann ein Schlüssel und die dazugehörige Schlüssel-ID auch für eine längere, geeignete Zeitspanne vom Sub-System zur Daten-Erst-Pseudonymisierung 212a zum Pseudonymisieren von Daten verwendet werden.

Bei den vorstehend im Zusammenhang mit den Figuren 3 bis 7 beschriebenen Ausführungsformen des Verfahrens 100 und des Systems 200 wird der jeweils neue Schlüssel vom Sub-System zum Pseudonymisierungsmanagement 240 generiert. Dies stellt jedoch lediglich spezielle Ausführungsformen dar. In einer anderen Ausführungsform kann der Schlüssel auch von einem anderen dargestellten oder nicht dargestellten Element generiert werden und dem Sub-System zum Pseudonymisierungsmanagement 240 zur weiteren Verteilung bereitgestellt werden.

Bei den vorstehend im Zusammenhang mit den Figuren 3 bis 7 beschriebenen Ausführungsformen des Verfahrens 100 und des Systems 200 werden zwischen allen Komponenten des Systems jeweils einzelne, individuelle Datensätze übertragen. Dies stellt jedoch lediglich spezielle Ausführungsformen dar. In einer anderen Ausführungsform können Daten auch in Form eines kontinuierlichen Datenstroms übertragen werden.

Bei den vorstehend im Zusammenhang mit den Figuren 3 bis 7 beschriebenen Ausführungsformen des Verfahrens 100 und des Systems 200 werden Daten in Datenbanken persistiert. Dies stellt jedoch lediglich spezielle Ausführungsformen dar. In einer anderen Ausführungsform können Daten auch in anderer geeigneter Form persistiert werden. Andere geeignete Formen können z.B. Dateien eines Dateisystems sein.

Bei den vorstehend im Zusammenhang mit den Figuren 3 bis 7 beschriebenen Ausführungsformen des Verfahrens 100 und des Systems 200 werden die zweit-pseudonymisierten Daten gemeinsam mit der Schlüssel-ID persistiert. Dies stellt jedoch lediglich spezielle Ausführungsformen dar. In einer anderen Ausführungsform kann an dieser Stelle auch z.B. ein Hashwert oder eine andere geeignete Referenz auf die zweit-pseudonymisierten Daten persistiert werden.

Bei den vorstehend im Zusammenhang mit den Figuren 3 bis 7 beschriebenen Ausführungsformen des Verfahrens 100 und des Systems 200 werden bei der Anfrage, mit der zweit-pseudonymisierte Daten wieder in erst-personenbezogene Daten überführt werden sollen, die zweit-pseudonymisierten Daten als Parameter mitgeliefert. Dies stellt jedoch lediglich spezielle Ausführungsformen dar. In einer anderen Ausführungsform kann an dieser Stelle auch z.B. ein Hashwert oder eine andere geeignete Referenz auf die zweit-pseudonymisierten Daten geliefert werden.

Bei den vorstehend im Zusammenhang mit den Figuren 3 bis 7 beschriebenen Ausführungsformen des Verfahrens 100 und des Systems 200 kommunizieren die Datenquellen 214 ausschließlich mit den Sub-Systemen im Haus des Nutzers, nämlich dem Sub-System zur Daten-Erst-Pseudonymisierung 212a und dem Sub-System zur Datenbereitstellung 212b, die sich beide im Hause des Nutzers befinden und beispielsweise auf dem Home-Gateway 212 implementiert sein können. Dies stellt jedoch lediglich spezielle Ausführungsformen dar. In einer anderen Ausführungsform können sich eines oder beide dieser Sub-Systeme auch im Rechenzentrum 342 des Betreibers des Hausautomatisierungssystems befinden.

Bei den vorstehend im Zusammenhang mit den Figuren 3 bis 7 beschriebenen Ausführungsformen des Verfahrens 100 und des Systems 200 werden Daten vom Sub-System zur Datenbereitstellung 212b im Haus des Nutzers direkt dem System zur Daten-Pseudonymisierung 230a im Rechenzentrum des Treuhänders 230 zur Verfügung gestellt. Dies stellt jedoch lediglich spezielle Ausführungsformen dar. In einer anderen Ausführungsform kann dies auch über ein weiteres System, z.B. einen Proxy-Server, einen "Reverse Proxy" oder einen Mixer geschehen, der eine Voranonymisierung insbesondere der technischen Adresse des Systems zur Datenbereitstellung 212b, z.B. eine Veränderung der IP Adresse des Systems zur Datenbereitstellung 212b vornimmt. Ein solcher Server kann z.B. ein weiteres Sub-System des Hausautomatisierungssystems 210 sein.

## Patentansprüche

1. Verfahren (100) zum Schutz von elektronischen Daten, die in einem Hausautomatisierungssystem (210) anfallen, umfassend:
Ermitteln (101) von Daten der elektronischen Daten, die mit einem Nutzer des Heimautomatisierungssystems (210) assoziierbar sind;
Verschleiern (103) der mit dem Nutzer des Heimautomatisierungssystems (210) assoziierbaren Daten der elektronischen Daten mittels eines ersten kryptographischen Schlüssels;
Übermitteln (105) der elektronischen Daten mit den mittels des ersten kryptographischen Schlüssels verschleierten Daten von dem Heimautomatisierungssystem (210) an eine Datenverwaltungsentität (230); und
Verschleiern (107) der mittels des ersten kryptographischen Schlüssels verschleierten Daten mittels eines zweiten kryptographischen Schlüssels durch die Datenverwaltungsentität (230).

2. Verfahren (100) nach Anspruch 1, wobei beim Schritt (105) des Übermitteins der elektronischen Daten mit den mittels des ersten kryptographischen Schlüssels verschleierten Daten an die Datenverwaltungsentität (230) ferner ein Identifier des ersten kryptographischen Schlüssels an die Datenveraltungsentität (230) übermittelt wird.

3. Verfahren (100) nach Anspruch 2, wobei der Schritt (103) des Verschleierns (103) der mit dem Nutzer des Heimautomatisierungssystems (210) assoziierbaren Daten der elektronischen Daten mittels des ersten kryptographischen Schlüssels durch das Hausautomatisierungssystem (210) durchgeführt wird.

4. Verfahren (100) nach Anspruch 3, wobei der erste kryptographische Schlüssel und/oder der zweite kryptographische Schlüssel von einer Schlüsselverwaltungsentität (240) bereitgestellt wird.

5. Verfahren (100) nach Anspruch 4, wobei der erste kryptographische Schlüssel von der Schlüsselverwaltungsentität (240) dem Hausautomatisierungssystem (210) bereitgestellt wird.

6. Verfahren (100) nach Anspruch 5, wobei der erste kryptographische Schlüssel von der Schlüsselverwaltungsentität (240) dem Hausautomatisierungssystem (210) zusammen mit dem Identifier des ersten kryptographischen Schlüssels bereitgestellt wird.

7. Verfahren (100) nach Anspruch 6, wobei das Verfahren (100) den weiteren Schritt umfasst, dass das Hausautomatisierungssystem (210) den Identifier des ersten kryptographischen Schlüssels als integralen Bestandteil in die elektronischen Daten einfügt, die an die Datenverwaltungsentität (230) übermittelt werden.

8. Verfahren (100) nach einem der vorstehenden Ansprüche, wobei das Verfahren (100) den weiteren Schritt umfasst, die elektronischen Daten mit den mittels des zweiten kryptographischen Schlüssels verschleierten Daten in einem Speicher (232) der Datenverwaltungsentität (230) zu speichern.

9. Verfahren (100) nach einem der vorstehenden Ansprüche, wobei beim Schritt (105) des Übermitteins der elektronischen Daten mit den mittels des ersten kryptographischen Schlüssels verschleierten Daten von dem Heimautomatisierungssystem (210) an die Datenverwaltungsentität (230) die elektronischen Daten mit den mittels des ersten kryptographischen Schlüssels verschleierten Daten über eine Proxyentität an die Datenverwaltungsentität (230) übermittelt werden, wobei die Proxyentität ausgebildet ist, wenigstens einen Identifier, insbesondere eine IP-Adresse, des Hausautomatisierungssystems (210) zu verschleiern.

10. Verfahren (100) nach einem der vorstehenden Ansprüche, wobei der Schritt des Verschleierns (103) der ermittelten Daten, die mit dem Nutzer des Hausautomatisierungssystems (210) assoziierbar sind, mittels des ersten kryptographischen Schlüssels einen Schritt des Verschlüsselns der ermittelten Daten, die mit dem Nutzer des Hausautomatisierungssystems (210) assoziierbar sind, mittels des ersten kryptographischen Schlüssels umfasst und/oder der Schritt des Verschleierns (107) der mittels des ersten kryptographischen Schlüssels verschleierten Daten mittels des zweiten kryptographischen Schlüssels einen Schritt des Verschlüsselns der mittels des ersten kryptographischen Schlüssels verschleierten Daten mittels des zweiten kryptographischen Schlüssels umfasst.

11. Verfahren (100) nach einem der vorstehenden Ansprüche, wobei das Verfahren (100) vor dem Schritt des Verschleierns (107) der mittels des ersten kryptographischen Schlüssels verschleierten Daten mittels des zweiten kryptographischen Schlüssels einen weiteren Schritt des Ermittelns der mittels des ersten kryptographischen Schlüssels verschleierten Daten der elektronischen Daten umfasst.

12. Hausautomatisierungssystem (210) mit einem Prozessor und einer Kommunikationsschnittelle, wobei in dem Hausautomatisierungssystem (210) elektronische Daten anfallen, wobei der Prozessor ausgebildet ist, Daten der elektronischen Daten, die mit einem Nutzer des Heimautomatisierungssystems (210) assoziierbar sind, zu ermitteln und die mit dem Nutzer des Heimautomatisierungssystems (210) assoziierbaren Daten der elektronischen Daten mittels eines ersten kryptographischen Schlüssels zu verschleiern, und wobei die Kommunikationsschnittstelle ausgebildet ist, die elektronischen Daten mit den mittels des ersten kryptographischen Schlüssels verschleierten Daten an eine Datenverwaltungsentität (230) zu übermitteln.

13. Datenverwaltungsentität (230) mit einem Prozessor und einer Kommunikationsschnittstelle, wobei die Kommunikationsschnittstelle ausgebildet ist, elektronische Daten mit mittels eines ersten kryptographischen Schlüssels verschleierten Daten zu empfangen und die mittels des ersten kryptographischen Schlüssels verschleierten Daten mittels eines zweiten kryptographischen Schlüssels zu verschleiern.

14. Schlüsselverwaltungsentität (240) mit einem Prozessor und einer Kommunikationsschnittstelle, wobei der Prozessor ausgebildet ist, wenigstens einen ersten kryptographischen Schlüssel und wenigstens einen zweiten kryptographischen Schüssel zu generieren, und wobei die Kommunikationsschnittstelle ausgebildet ist, den ersten kryptographischen Schlüssel an ein Hausautomatisierungssystem (210) zu übermitteln, um mit dem Nutzer des Heimautomatisierungssystems (210) assoziierbaren Daten mittels des ersten kryptographischen Schlüssels zu verschleiern, und wobei die Kommunikationsschnittstelle ausgebildet ist, den zweiten kryptographischen Schlüssel an eine Datenverwaltungsentität (230) zu übermitteln, um die mittels des ersten kryptographischen Schlüssels verschleierten Daten mittels des zweiten kryptographischen Schlüssels zu verschleiern.

15. System (200) zum Schutz von elektronischen Daten, umfassend:
ein Heimautomatisierungssystem (210) nach Anspruch 12;
eine Datenverwaltungsentität (230) nach Anspruch 13; und
eine Schlüsselverwaltungsentität (240) nach Anspruch 14.
